# EUROPÄISCHE PATENTANMELDUNG

(11) **EP 0 762 457 A2**
(43) Veröffentlichungstag der Anmeldung: **12.03.1997**
(21) Anmeldenummer: 96113493.9
(22) Anmeldetag: 22.08.1996
(51) Int. Cl.: H01H 71/04

(54) **Verfahren und Vorrichtung zur aktiven Zustandserkennung an Leitungsschutzschaltern unter Verwendung einer Elektrodenanordnung**

(30) Priorität: 31.08.1995 DE 19532196
(71) Anmelder: SIEMENS AKTIENGESELLSCHAFT, 80333 München (DE)
(72) Erfinder: Maier, Reinhard, Dr., 91074 Herzogenaurach (DE); Branston, David Walter, Dr., 91090 Effeltrich (DE)

(57) **Zusammenfassung**

Es wurde bereits vorgeschlagen, eine Zustandserkennung unter Verwendung einer Elektrodenanordnung vorzunehmen. Speziell zur aktiven Zustandserkennung wird der Leitungsschutzschalter im Innern einer Elektrodenanordnung, die mit einem Wechselstromsignal beaufschlagbar ist, angeordnet, so daß die Kapazität des durch die Elektrodenanordnung gebildeten Kondensators beim Schalten des Leitungsschutzschalters verändert wird. Das Ausgangssignal der Elektrodenanordnung wird mit dem Wechselstromsignal verglichen und durch weiteren Vergleich mit vordefinierten Normsignalen Aussagen über den Schaltzustand des Leitungsschutzschalters abgeleitet. Die Auswerteschaltung kann in einem separaten Gehäuse (20) unmittelbar neben dem Leitungsschutzschalter (1, 10) angeordnet sein, wobei deren Ausgangssignal direkt in ein vorhandenes Bussystem einkoppelbar ist.

## Beschreibung

Die Erfindung bezieht sich auf ein Verfahren zur aktiven Zustandserkennung an Leitungsschutzschaltern unter Verwendung einer Elektrodenanordnung. Daneben bezieht sich die Erfindung auch auf eine Vorrichtung zur Durchführung des Verfahrens mit einer Auswerteschaltung in einem separaten Gehäuse.

Bei modernen Verteilernetzen wird gefordert, daß der Schaltzustand einzelner Leitungsschutzschalter detektiert werden kann und über ein Bussystem weitergemeldet wird. Dabei sollen Eingriffe in das geschlossene Gehäuse des Leitungsschutzschalters vermieden werden. Hierzu sind vom Stand der Technik mechanisch angekoppelte Zusatzschalter vorbekannt.

Mit der nicht vorveröffentlichten europäischen Patentanmeldung Nr. 94106336.4 wird bereits ein Verfahren zur Zustandserkennung an Leitungsschutzschaltern vorgeschlagen, bei dem eine elektrisch leitende Platte bzw. eine leitfähige Schicht derart außen am Leitungsschutzschalter angeordnet wird, daß sie mit einem Leiter im Inneren des Leitungsschutzschalters eine Kapazität bildet. Insbesondere wird dabei ein kapazitiver Spannungsteiler mit Hilfe eines außen am Leitungsschutzschalter angebrachten Plattenkondensators gebildet, dessen eine Platte als Meßfläche dient, die mit dem Leiter im Inneren des Leitungsschutzschalters die Kapazität bildet. Bei der zugehörigen Anordnung mit einem gekapselten Leitungsschutzschalter, der auf einer Befestigungsschiene aufbringbar ist, sind dem Leitungsschutzschalter ein Gehäuse mit wenigstens einem Meßkondensator und gegebenenfalls einer Auswerteschaltung und einem Busankopplungsbaustein zugeordnet, wobei das Gehäuse neben dem Leitungsschutzschalter auf der Befestigungsschiene aufschnappbar ist.

Eigenart letzteren Verfahrens und der zugehörigen Anordnung ist, daß zur Erfassung des Schaltzustandes im Schalter spannungsführende Teile vorhanden sein müssen, der Schalter also am Netz liegen muß, wodurch der Schaltzustand des Schutzschalters passiv erfaßt wird.

Aufgabe der Erfindung ist es demgegenüber, ein Verfahren anzugeben und die zugehörige Vorrichtung zu schaffen, mit denen der Schaltzustand eines Leitungsschutzschalters auch dann erfaßt werden kann, wenn keine Spannung am Schalter liegt. Der Schaltzustand soll vielmehr mit einer aktiven Signalquelle detektiert werden.

Die Aufgabe ist erfindungsgemäß durch folgende Maßnahmen gelöst:
- Der Leitungsschutzschalter wird im Innern der Elektrodenanordnung, die mit einem Wechselstromsignal beaufschlagt ist, angeordnet, so daß die Kapazität der Elektrodenanordnung beim Schalten des Leitungsschutzschalters verändert wird,
- das Ausgangssignal der Elektrodenanordnung wird mit dem Wechselstromsignal verglichen,
- durch einen weiteren Vergleich mit vordefinierten Normsignalen werden Aussagen über den Schaltzustand des Leitungsschutzschalters abgeleitet.

Beim erfindungsgemäßen Verfahren wird der durch das Wechselstromsignal über die Elektrodenanordnung mit dem Leitungsschutzschalter fließende Strom mit dem Ausgangssignal in seiner Phase und Amplitude verglichen. Durch Ausbildung der Elektrodenanordnung aus mehreren Platten werden Meßkondensatoren gebildet. Dazu ist bei der zugehörigen Vorrichtung eine Auswerteschaltung in einem separaten Gehäuse vorhanden, wobei das Gehäuse mit der Auswerteschaltung unmittelbar neben dem Schaltergehäuse auf der Halteschiene anordenbar, insbesondere aufschnappbar, ist. Die Auswerteschaltung enthält dabei Mittel zum Vergleich des der Elektrodenanordnung eingeprägten Stromes mit dem nichtphasenverschobenen Strom und erzeugt ein Ausgangssignal. Insbesondere weist die Auswerteschaltung einen Synchronmodulator und einen Schwellwertschalter auf, der die Signale mit einem voreingestellten Wert vergleicht, und bei dem insbesondere das Ausgangssignal direkt in ein Bussystem einkoppelbar ist.

Bei der Erfindung können vorteilhafterweise von den Platten mehrere Meßkondensatoren gebildet werden, wodurch der Schaltzustand des Leitungsschutzschalters hinsichtlich unterschiedlicher Auslösemechanismen, wie beispielsweise Handauslösung, Überstromauslösung oder Kurzschlußauslösung, erkannt werden kann.

Weitere Einzelheiten und Vorteile der Erfindung ergeben sich aus der nachfolgenden Figurenbeschreibung eines Ausführungsbeispiels anhand der Zeichnung in Verbindung mit weiteren Unteransprüchen. Die einzige Figur zeigt ein Schaltbild zur Realisierung des erfindungsgemäßen Verfahrens.

In der Figur ist mit 1 ein Leitungsschutzschalter bezeichnet, der in einem Gehäuse 10 gekapselt ist. Der Leitungsschutzschalter ist zwischen zwei Plattenelektroden 2 und 3 eingebracht, die bei Berücksichtigung des dazwischenliegenden Dielektrikums mit vorgegebener Dielektrizitätskonstante εᵣ einen Kondensator bilden. Diese Anordnung ist an eine aktive Signalquelle 4 angeschlossen, der eine zugehörige Auswerteschaltung mit Komponenten 5 bis 9 zugeordnet ist. Die Auswerteschaltung einschließlich Signalquelle kann in einem separaten Gehäuse 20 angeordnet sein, das direkt neben dem Leitungsschutzschaltergehäuse 10 anordenbar ist.

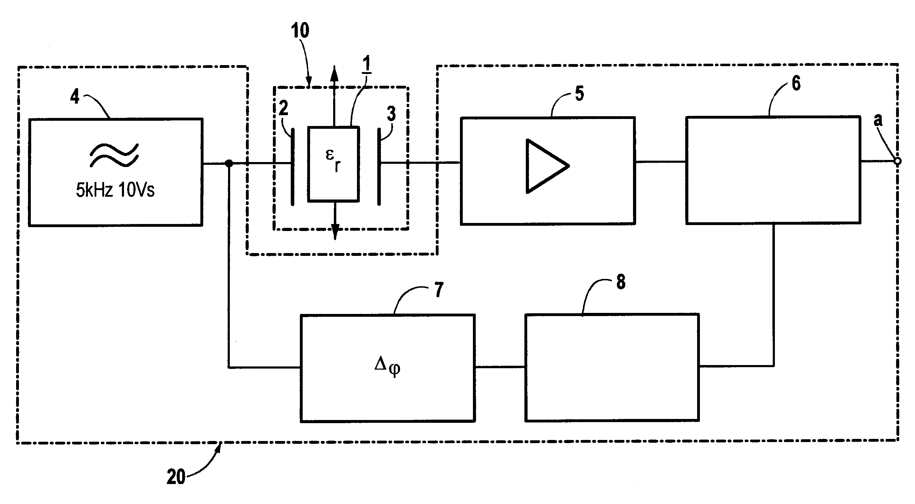

Mit einer Schaltungsanordnung entsprechend Figur 1 ergibt sich folgende Funktion: In der als Oszillator mit beispielsweise 5 kHz und 10 V Spitze-Sinusspannung ausgebildeten Signalquelle 4 wird ein Signal erzeugt, welches anschließend aufgespalten wird. Es gelangt einerseits zur Anordnung mit den Elektroden 2 und 3, in die der Leitungsschutzschalter eingebracht ist, und in der sich demzufolge ein Dielektrikum mit von Luft abweichender Dielektrizitätskonstante εᵣ bewegt. Dadurch wird die Kapazität des von den Elektroden 2 und 3 gebildeten Kondensators verändert. Ebenso kann ein leitendes Metallteil, das zwischen den Platten 2 und 3 bewegt wird, ohne letztere zu berühren, die Kapazität des Kondensators ändern.

Der durch den von den Elektroden 2 und 3 gebildete Kondensator fließende Strom wird auf einen Verstärker 5 gegeben und gelangt anschließend in einen sogenannten Synchrondemodulator/Lock-in-Baustein 6.

Gleichzeitig gelangt das vor der Elektrodenanordnung abgezweigte Signal andererseits zu einem Phasenschieber 7, mit dem eine vorgebbare Phasenverschiebung des Eingangssignals bewirkt werden kann. Vom Phasenschieber 7 wird das Signal gegebenenfalls einer Signalaufbereitung, beispielsweise mit einem Schmitt-Trigger 8, unterzogen. Dieses so aufbereitete Signal wird als Vergleichssignal in den Synchrondemodulator/Lock-in-Baustein 6 gegeben.

Wenn in der Kondensatoranordnung das Dielektrikum oder das Metallteil in einem definierten Zustand ist, wird der Phasenschieber 7 so abgeglichen, daß am Ausgang des Synchrondemodulators/Lock-in-Bausteines 8 das Signal 0 V erscheint. Ist in der Elektrodenanordnung das Dielektrikum oder ein Metallteil in einem anderen Zustand, hat damit der Kondensator eine geänderte Kapazität, so daß die Phasenverhältnisse geändert sind und am Ausgang des Synchrondemodulators 8 ein von 0 V verschiedenes Signal erscheint.

Für die vorstehend beschriebene Funktionsweise können handelsübliche Phasenschieber und Synchrondemodulator/Lock-in-Bausteine verwendet werden, wie sie beispielsweise in U. Tietze, Ch. Schenk "Halbleiter-Schaltungstechnik", 8. Auflage (Springer Verlag Berlin 1986), Seiten 431 ff. und Seiten 797 ff. beschrieben sind. Für die praktische Realisierung wird lediglich eine Zuordnung einzelner Schaltzustände, die als Normsignale definiert sind, zu den Meßsignalen vorgenommen.

Bei einem weiteren Ausführungsbeispiel kann die Elektrodenanordnung zur Bildung des Kondensators durch Platten oder Beschichtungen realisiert werden, die unmittelbar außen am Gehäuse des Leitungsschutzschaltes angebracht sind. In jedem Fall kann mit einer solchen Anordnung die Stellung der mechanischen beweglichen Teile innerhalb des Leitungsschutzschalters detektiert werden. Die Teile können dabei entweder metallische Teile oder auch Kunststoffteile sein, die eine von Luft abweichende Dielektrizitätskonstante haben.

In konkreter Ausgestaltung kann bei einer praxisgerechten Vorrichtung zur Schaltzustandserkennung eine Platte an der linken und eine Platte an der rechten Gehäuseseite des Leitungsschutzschalters angeordnet sein. Es ist aber auch möglich, beide Platten auf einer Seite des Leitungsschutzschalters anzuordnen.

Die Schaltglieder der Figur 1 bilden zusammen die Auswerteschaltung und sind vorzugsweise in einem Gehäuse untergebracht, welches auf der Hubschiene direkt neben dem Leitungsschutzschalter aufschnappbar ist. Dabei ist das Ausgangssignal der Auswerteschaltung ohne Systembruch an ein vorhandenes Bussystem ankoppelbar.

Durch eine zusätzliche Auswertung von Signalanteilen im höherfrequenten Bereich können mit der beschriebenen Vorrichtung auch der im Schalter entstehende Lichtbogen detektiert werden, so daß insbesondere ein Kurzschluß erfaßbar ist. Insbesondere ist eine separate Signalanalyse sowie zusätzliche Auswertung im 50 Hz-Bereich möglich. Durch mehrere Meßkondensatoren kann dann speziell zwischen Handauslösung, Überstromauslösung und Kurzschlußauslösung des Schalters unterschieden werden.

## Patentansprüche

1. Verfahren zur aktiven Zustandserkennung an Leitungsschutzschaltern unter Verwendung einer Elektrodenanordnung, **gekennzeichnet** durch folgende Maßnahmen:
- der Leitungsschutzschalter wird im Innern der Elektrodenanordnung, die mit einem Wechselstromsignal beaufschlagt wird, angeordnet, so daß die Kapazität der Elektrodenanordnung beim Schalten des Leitungsschutzschalters verändert wird
- das Ausgangssignal der Elektrodenanordnung wird mit dem Wechselstromsignal verglichen
- durch einen weiteren Vergleich mit vordefinierten Normsignalen werden Aussagen über den Schaltzustand des Leitungsschutzschalters abgeleitet.

2. Verfahren nach Anspruch 1, **dadurch gekennzeichnet,** daß der durch das Wechselstromsignal über die Elektrodenanordnung mit Leitungsschutzschalter fließende Strom mit dem Ausgangsstrom in seiner Phase und Amplitude verglichen wird.

3. Verfahren nach Anspruch 1, **dadurch gekennzeichnet,** daß zur Ausbildung der Elektrodenanordnung wenigstens eine elektrisch leitende Platte bzw. eine leitfähige Schicht außen am Schaltergehäuse angeordnet wird.

4. Verfahren nach Anspruch 3, **dadurch gekennzeichnet,** daß zur Ausbildung der Elektrodenanordnung je eine Platte (2, 3) an der linken und an der rechten Seite des Gehäuses (10) des Leitungsschutzschalters (1) angeordnet wird.

5. Verfahren nach Anspruch 3, **dadurch gekennzeichnet,** daß zwei Platten (2, 3) auf einer Seite des Gehäuses (10) des Leitungsschutzschalters (1) angeordnet sind.

6. Verfahren nach Anspruch 6, **dadurch gekennzeichnet,** daß mehrere Meßkondensatoren gebildet werden, so daß der Schaltzustand hinsichtlich unterschiedlicher Auslösemechanismen, insbesondere bezüglich Handauslösung, Überstromauslösung oder Kurzschlußauslösung, erkannt werden kann.

7. Vorrichtung zur Durchführung des Verfahrens nach Anspruch 1 oder einem der Ansprüche 3 bis 6 mit einer Auswerteschaltung in einem separaten Gehäuse, **dadurch gekennzeichnet,** daß das Gehäuse (20) mit der Auswerteschaltung auf der Hubschiene neben dem Schaltergehäuse (10) anordenbar, insbesondere aufschnappbar ist.

8. Vorrichtung nach Anspruch 6, **dadurch gekennzeichnet,** daß die Auswerteschaltung Mittel (4 bis 9) zum Vergleich des der Elektrodenanordnung eingeprägten Stromes mit dem nicht phasenverschobenen Strom enthält und ein Ausgangssignal erzeugt.

9. Vorrichtung nach Anspruch 7, **dadurch gekennzeichnet,** daß die Auswerteschaltung (5 bis 9) einen Synchrondemodulator (6) und einen Schwellwertschalter aufweist, der die Signale mit einem voreingestellten Wert vergleicht.

10. Vorrichtung nach Anspruch 8, **dadurch gekennzeichnet,** daß das Ausgangssignal der Auswerteschaltung (5 bis 9) in ein Bussystem einkoppelbar ist.
